# EUROPÄISCHE PATENTSCHRIFT

(11) **EP 0 565 124 B1**
(45) Veröffentlichungstag und Bekanntmachung des Hinweises auf die Patenterteilung: **08.10.1997**
(21) Anmeldenummer: 93105887.9
(22) Anmeldetag: 08.04.1993
(51) Int. Cl.: G01L 1/18, G01L 9/06, G01L 1/22

(54) **Verfahren und Schaltungsanordnung zur elektrischen Kompensation des Temperatureinflusses auf das Messsignal von mechanoelektrischen Messwandlern**
Procedure and circuit for the electrical compensation of temperature-effects on the measured signal of a mechanical-electrical measuring transducer
Procédé et circuit de compensation électrique de l'influence de la température sur le signal de mesure d'un transducteur de mesure mécanique-électrique

(30) Priorität: 09.04.1992 DE 4211997
(43) Veröffentlichungstag der Anmeldung: 13.10.1993
(73) Patentinhaber: Erich Jaeger GmbH, D-97204 Hoechberg (DE)
(72) Erfinder: Küchler, Gert, Dr., Physiker, W-8702 Kist (DE); Erdmann, Udo, Dipl.-Ing., W-8706 Hoechberg (DE)
(74) Vertreter: Schütz, Peter, Dipl.-Ing.

(56) Entgegenhaltungen:
- EP-A- 0 071 962
- PATENT ABSTRACTS OF JAPAN vol. 13, no. 314 (P-899)(3662) 18. Juli 1989 ; & JP-A-18 3 129
- PATENT ABSTRACTS OF JAPAN vol. 12, no. 468 (P-797)(3315) 8. Dezember 1988 ; & JP-A-63 187 131

## Beschreibung

Die Erfindung betrifft ein Verfahren zur elektrischen Kompensation des Temperatureinflusses auf das Meßsignal von mechanoelektrischen Meßwandlern, die mit piezoresistiven Widerständen insbesondere in Brückenschaltung arbeiten, sowie eine Schaltungsanordnung, mit der dieses Verfahren durchführbar ist.

Der Aufbau und die Funktion von piezoresistiven Meßwandlern zur Messung von Druck, Kraft, Beschleunigung usw. sind bekannt. Sie haben eine etwa 10-fach höhere Empfindlichkeit als Metallschichtdehnmeßstreifen. Andererseits besteht einer der wesentlichen prinzipiellen Nachteile der piezoresistiven Meßwandler in der relativ großen Temperaturabhängigkeit der aus Halbleitermaterial gebildeten piezoresistiven Widerstände. Ihr Temperaturkoeffizient des Widerstandswertes beträgt etwa 2∗10⁻³/K (während z.B. Metallschichtdehnmeßstreifen einen TK von 10⁻⁵/K haben). Infolge der Temperaturänderungen der Widerstandswerte ändert sich der üblicherweise als Offset bezeichnete Spannungswert des Meßsignals, den man im Ruhezustand erhält, wenn die Meßwiderstände nicht mit Druck oder der sonstigen Meßgröße beaufschlagt werden, und der konstruktions- und/oder schaltungsbedingt gewöhnlich von Null abweicht. Darüberhinaus ändert sich mit der Temperatur der als Verhältnis aus elektrischem Ausgangssignal zur mechanischen Meßgröße definierte Übertragungsfaktor.

Bei symmetrischem Schaltungsaufbau des Meßwandlers nach Art einer Wheatstoneschen Meßbrücke hängen die resultierenden Temperaturfehler direkt von dem bei der Herstellung erreichten Grad der Brückensymmetrie ab. Brückensymmetrie in bezug auf die Widerstände läßt sich durch Abgleich der Brückenwiderstände beispielsweise durch Lasertrimmung erreichen, was aber erheblich die Herstellungskosten erhöht.

Eine weitere Möglichkeit der Korrektur von Temperaturfehlern ist die externe Beschaltung der Brücke mit temperaturabhängigen Bauelementen. So können beispielsweise in konstantspannungsgespeisten Brücken Widerstände mit negativem Temperaturkoeffizient (NTC) speiseseitig in Reihe zur Brücke oder Widerstände mit positivem TK speiseseitig parallel zur Brücke angeordnet werden. Bei hohen Anforderungen müssen die Kompensationswiderstände entsprechend dem Temperaturverhalten der Brücke selektiert werden, was ebenfalls sehr aufwendig ist. Stattdessen kann man auch die Temperatur durch temperaturabhängige Bauelemente möglichst in der Nähe der piezoresistiven Meßwiderstände messen und in Abhängigkeit hiervon eine analoge Kompensation durchführen oder nach Digitalisierung korrigierte Ergebnisse errechnen. Nachteilig bei diesen Kompensationsmethoden ist, daß die Messung der am piezoresistiven Widerstand wirksamen Temperatur mit extern angebrachten oder auf dem die Brückenschaltung enthaltenden Chip plazierten Temperaturmeßfühlern durch undefinierte Wärmeübergangswiderstände verfälscht wird, so daß die tatsächlich am piezoresistiven Widerstand wirkende Temperatur sowohl in ihrer absoluten Größe als auch in ihrem zeitlichen Verlauf nicht der gemessenen entspricht. Da zudem aufgrund des Meßprinzips (Konstantspannung oder Konstantstrom) ein Leistungsumsatz und damit eine Erwärmung der piezoresistiven Widerstände stattfindet, was aufgrund der Wärmekapazität nicht zwangsläufig eine nennenswerte Erwärmung des Chips zur Folge haben muß, wird deutlich, daß die Temperaturkompensation fehlerhaft ist, und zwar sowohl hinsichtlich ihrer statischen Kennlinien als auch bei Temperaturänderung und bei Änderungen der umgesetzten Leistung, beispielsweise bei unterschiedlicher Aussteuerung der Brücke oder durch Einschaltdrift beim und nach dem Einschalten mit Konstantspannung bzw. Konstantstrom.

Aus der EP-A-0 071 962 ist ein piezoresistiver Meßwandler mit einer die piezoresistiven Widerstände enthaltendem Meßbrücke bekannt, die mit ihrer ersten Diagonale in Reihe mit einer mit einer Konstantstromquelle geschaltet und mit ihrer zweiten Diagonale mit einer das Meßsignal des Meßwandlers erzeugenden Schaltung verbunden ist. An die Anschlüsse der ersten Diagonale ist eine Meßanordnung zur Korrektur des Temperatureinflusses auf das Meßsignal geschaltet. Der aus der ersten Diagonale gewonnene Meßwert wird als Korrektursignal zur Steuerung der Stromquelle und damit der Temperaturkompensation genutzt. Die Konstantstromquelle enthält einen in Reihe mit der ersten Diagonale geschalteten Widerstand.

Aus der JP-A-183 129 ist es an sich bekannt, zur Kompensation nichtlinearer Temperaturabhängigkeit einen Festwiderstand parallel zu einem der piezoresistiven Brückenwiderstände eines mechanoelektrischen Meßwandlers zu schalten.

Der Erfindung liegt die Aufgabe zugrunde, ein Verfahren und eine Schaltungsanordnung anzugeben, die einfach und mit geringem Aufwand eine weitgehend genaue, von Fehlereinflüssen freie Kompensation der temperaturbedingten Änderungen des Meßsignals (Offset) und des Übertragungsfaktors des Meßwandlers ermöglichen.

Diese Aufgabe wird durch die Merkmale der Patentansprüche gelöst.

Die Erfindung beruht auf der Erkenntnis, daß durch Ausnutzen der Temperaturabhängigkeit der piezoresistiven Widerstände ein temperaturproportionales Korrektursignal erzeugt werden kann, das von den oben beschriebenen Fehlereinflüssen auf die Temperaturkompensation weitgehend frei ist. Die Erfindung zeichnet sich durch einen geringen schaltungstechnischen Aufwand aus und kann in vielen Fällen mit ausreichender Genauigkeit ohne Funktionalnetzwerk (Multiplizierer) realisiert werden.

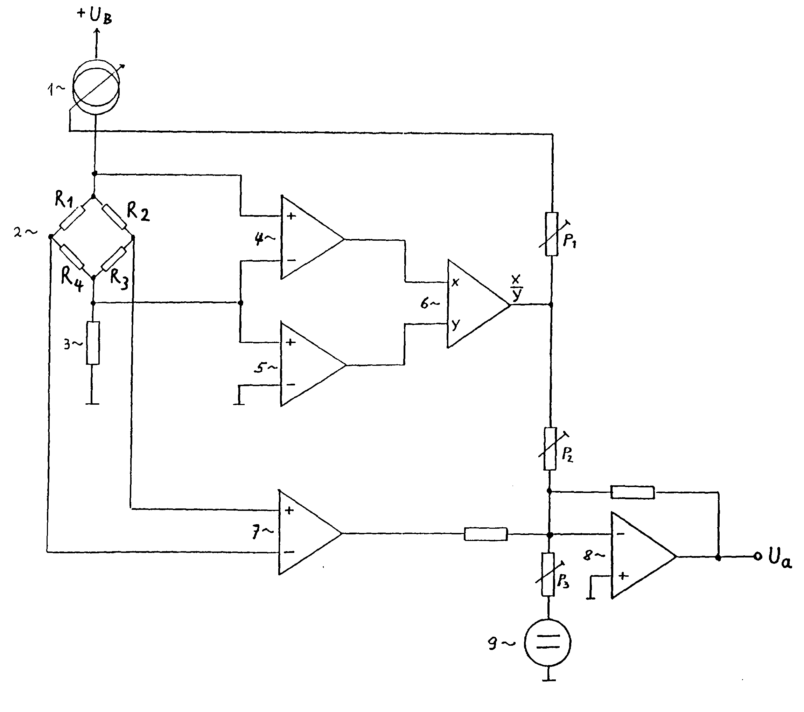

An einem Ausführungsbeispiel, das schematisch und vereinfacht in der Zeichnung dargestellt ist, wird die Erfindung näher erläutert.

Der dargestellte, beispielsweise zur Druckmessung dienende piezoresistive Meßwandler besteht im wesentlichen aus vier nominell gleichen, sich aber durch herstellungsbedingte Abweichungen unterscheidenden piezoresistiven Widerständen R₁, R₂, R₃ und R₄, die aus Siliziumhalbleitermaterial bestehen und zu einer Wheatstoneschen Brücke verschaltet sind. Derartige Meßwandler sind an sich im Handel erhältlich. Es sind auch andere Meßschaltungen möglich.Die Brückenschaltung 2 ist zwischen eine spannungsgesteuerte Konstantstromquelle 1 und einen Referenzwiderstand 3 geschaltet. Diese Reihenschaltung liegt zwischen einer Betriebsgleichspannungsklemme U_{B} und Bezugspotential. Bei der Druckmessung ändert sich der Wert aller vier Widerstände, jedoch gegensinnig, so daß z.B. der Widerstandswert von R₁ und R₃ größer und derjenige von R₂ und R₄ kleiner wird und folglich eine Differenzspannung an der Meßdiagonale zur Verfügung steht.

Das an der Meßdiagonale der Brückenschaltung 2 abgegriffene Drucksignal wird darstellungsgemäß nach Verstärkung durch einen Operationsverstärker 7 einem als Summationspunkt dienenden Operationsverstärker 8 zugeführt, der eine Druckmeßspannung Uₐ als Nutzsignal erzeugt. Der andere Eingang des Operationsverstärkers 8 liegt an Masse.

Über die zwischen der Konstantstromquelle 1 und dem Referenzwiderstand 3 liegende andere Brückendiagonale ist ein die Brückenspeisespannung verstärkender Operationsverstärker 4 geschaltet, dessen an den Referenzwiderstand 3 angeschlossene Klemme mit der einen Klemme eines weiteren Operationsverstärkers 5 verbunden ist. Der Operationsverstärker 5 liegt mit seinem zweiten Eingang an Masse und dient als Referenzspannungsverstärker.

Die Ausgänge der Verstärker 4 und 5 sind an die beiden Eingänge eines Verstärkers 6 geschaltet, der als Differenzverstärker ausgebildet sein kann, vorzugsweise aber als Quotientenbildner arbeiten soll. Der Ausgang X/Y des Verstärkers 6 steuert einerseits über ein Potentiometer P₁ den Spannungsteuereingang der Konstantstromquelle 1 und ist andererseits über ein zweites Potentiometer P₂ an den Signaleingang des Verstärkers 8 angeschlossen. Zwischen den Signaleingang des Verstärkers 8 und Masse ist ein drittes Potentiometer P₃ in Reihe mit einer Kompensationsspannungsquelle 9 geschaltet.

Am Ausgang des Verstärkers 6 steht ein Korrektursignal zur Verfügung, das gleichzeitig zur Kompensation sowohl des Temperaturfehlers des Übertragungsfaktors des Druckwandlers als auch des temperaturbedingten Offsetfehlers des Meßsignals genutzt wird, wie nachfolgend erläutert wird.

Bei vollständiger elektrischer Symmetrie (R₁ = R₂ = R₃ = R₄; K₁ = K₂ = K₃ = K₄) und mechanischer Symmetrie (ε₁ = -ε₂ = ε₃ = -ε₄) der Brücke ist deren Ersatzwiderstand Rₑᵣₛ unabhängig von der Meßgröße (Druck, Kraft, Beschleunigung usw.), wobei R die Widerstandswerte, K die jeweiligen relativen Widerstandsänderungen bei der Dehnung ε und Rₑᵣₛ der Widerstandwswert der Parallelschaltung aus (R₁ + R₄) und (R₂ + R₃) sind. Temperaturänderungen sind dagegen wegen der gleichsinnigen Temperaturabhängigkeit der aus Silizium bestehenden piezoresistiven Widerstände direkt als Änderung des Ersatzwiderstandes Rₑᵣₛ der Brücke meßbar. Wenn die Brücke beispielsweise wie bei dem dargestellten Ausführungsbeispiel mit Konstantstrom gespeist wird, läßt sich an der Längsdiagonale eine der Temperatur der piezoresistiven Widerstände proportionale Spannung abgreifen, die über die aus den Verstärkern 4,5 und 6 gebildete Korrekturspannungsmeßanordnung zur Kompensation der Temperaturabhängigkeit des Offsetwerts (Nullpunkt) der Druckmeßspannung Uₐ genutzt werden kann.

Die Temperaturabhängigkeit des Übertragungsfaktors des Meßwandlers ist am einfachsten durch eine temperaturabhängige Änderung des Speisestroms oder der Speisespannung der Brückenschaltung 2 kompensierbar. Bei dem beschriebenen Ausführungsbeispiel geschieht dies durch Änderung des von der Konstantstromquelle 1 gelieferten Speisestroms. Mit der temperaturabhängigen Änderung des Speisestroms wäre aber eine Kompensation der Temperaturabhängigkeit der Offsetspannung nicht mehr ohne weiteres möglich, da eine genaue Spannungsmessung zur Bestimmung des Ersatzwiderstands der Brückenschaltung gleichbleibenden Strom voraussetzen würde. Als Bestandteil der Erfindung ist deshalb die Schaltungsanordnung zur Lösung dieses Problems so ausgebildet, daß eine Bestimmung des Ersatzwiderstands Rₑᵣₛ der Brückenschaltung unabhängig oder wenigstens weitgehend unabhängig von der Größe des Speisestroms möglich ist. Dies wird in der Hauptsache durch den in Reihe zur stromgespeisten Brückenschaltung 2 geschalteten Referenzwiderstand 3 erreicht, an dem eine Referenzspannung als zusätzliches Signal zur Verfügung steht, das von dem Operationsverstärker 5 verstärkt wird. Der Referenzwiderstand 3 soll von Temperaturänderungen unbeeinflußt bleiben, also einen kleinen Temperaturkoeffizienten haben. Bei einer Temperaturänderung ändert sich also nur der Brückenersatzwiderstand Rₑᵣₛ. Beispielsweise wird er bei gegebenem Strom bei Temperaturerhöhung größer. Wenn der den Verstärkern 4 und 5 für die Brückenspeisespannung bzw. für die Referenzspannung nachgeschaltete Verstärker 6 als Quotientenbildner arbeitet, erzeugt er am Ausgang einen temperaturabhängigen Anstieg des Quotienten Rₑᵣₛ/R_{ref}, der von Stromänderungen unabhängig ist.

Durch die positive Mitkopplung wird über das Potentiometer P₁ ein dem erwähnten Quotienten proportionaler Teil der Ausgangsspannung des Verstärkers 6 an der spannungsgesteuerten Konstantstromquelle 1 wirksam, der genau die für die Erhöhung des Speisestroms zum Ausgleich der temperaturbedingten Reduzierung des Übertragungsfaktors notwendige Größe hat. Wie oben erläutert wurde, ist von dieser Änderung des Brückenspeisestroms die Quotientenbildung am Ausgang des Verstärkers 6 unbeeinflußt.

Eine dem Betrag der temperaturbedingten Offsetspannungsänderung entsprechende Spannung entgegengesetzt gerichteter Polarität wird über das Potentiometer P₂ zur Offsetkompensation an den Summationspunkt, also an den Signaleingang des Operationsverstärkers 8 gelegt.

Der Referenzwiderstand 3 ist vorzugsweise im Zusammenhang mit einem zweckmäßigen Abgleich der Schaltungsanordnung so dimensioniert, daß er bei einem ausgewählten Temperaturwert, beispielsweise an der oberen oder unteren Grenze des Betriebstemperaturbereiches etwa die Größe des Brückenersatzwiderstandes Rₑᵣₛ hat. Zum statischen Offsetabgleich der Druckmeßspannung Uₐ beispielsweise am unteren Ende des Temperaturbereiches dient das Potentiometer P₃, während mit dem Potentiometer P₂ ein weiterer Abgleich bei einer anderen Temperatur möglich ist.

Eine Kompensationsschaltung der dargestellten Art kann für praktische Meßaufgaben auch dann mit ausreichender Genauigkeit arbeiten, wenn der Verstärker 6 nicht als Quotientenbildner, sondern als Differenzverstärker betrieben wird. Bei zweckmäßiger Schaltungsauslegung läßt sich hierbei die Stromabhängigkeit der Brückenwiderstandsmessung zur Kompensation nichtlinearer Anteile der Temperatur-Widerstandskennlinie, also des Übertragungsfunktions-Temperaturverhaltens und/oder der Temperatur-Offset-Kennlinie nutzen.

Wenn man in an sich bekannter Weise parallel zu einem der Brückenwiderstände, beispielsweise zum Widerstand R₄ einen Festwiderstand geringer Temperaturabhängigkeit schaltet, kann man hierdurch zur Verbesserung der Temperaturkompensation die Krümmung der nichtlinearen Temperatur-Offset-Kennlinie an die nichtlineare Abhängigkeit der piezoresistiven Widerstände von der Temperatur anpassen, so daß Restfehler auf ein Minimum herabgesetzt werden.

## Patentansprüche

1. Verfahren zur elektrischen Kompensation des Temperatureinflusses auf das Meßsignal von mechanoelektrischen Meßwandlern, die mit piezoresistiven Widerständen (R₁-R₄) in einer Brückenschaltung (2) arbeiten, die mit ihrer ersten Diagonale an eine Stromquelle (1) und mit ihrer zweiten Diagonale an eine das Meßsignal erzeugende Schaltung (7,8) angeschlossen ist, wobei zur Erzeugung eines von der Temperatur abhängigen Korrektursignals die temperaturabhängigen Änderungen des Ersatzwiderstands der Brückenschaltung (2) zwischen den Klemmen gemessen werden, mit denen die Brückenschaltung (2) an ihre Speisestromquelle (1) angeschlossen ist, und der sich hierbei ergebende Meßwert als Korrektursignal zur Kompensation des Temperatureinflusses genutzt wird,
**dadurch gekennzeichnet**, daß die Änderungen des Ersatzwiderstands als Änderungen des Quotienten (x/y) aus der Brückenspeisespannung und einer Referenzspannung gemessen werden, die das Korrektursignal bilden.

2. Verfahren nach Anspruch 1, **dadurch gekennzeichnet**, daß proportional zur Änderung des Brückenersatzwiderstands der Speisestrom oder die Speisespannung der Brückenschaltung (2) zur Kompensation von temperaturabhängigen Änderungen des Übertragungsfaktors des Meßwandlers korrigiert wird.

3. Verfahren nach einem der vorangehenden Ansprüche, **dadurch gekennzeichnet**, daß aus dem durch die Widerstandsmessung an der ersten Brückendiagonale gewonnenen Meßwert eine Spannung abgeleitet wird, die dem Betrag der temperaturbedingten Änderungen des Meßsignals des Meßwandlers entspricht, aber entgegengesetzt gerichtete Polarität hat und zur Kompensation dieser Änderungen des Meßsignals verwendet wird.

4. Verfahren nach einem der vorangehenden Ansprüche, **dadurch gekennzeichnet**, daß die nichtlineare Temperaturabhängigkeit des Meßsignals des Meßwandlers mit einem parallel zu einem der piezoresistiven Brückenwiderstände geschalteten Festwiderstand geringer Temperaturabhängigkeit an die charakteristische nichtlineare Temperaturabhängigkeit der piezoresistiven Widerstände angepaßt wird.

5. Schaltungsanordnung zur elektrischen Kompensation des Temperatureinflusses auf das Meßsignal von mechanoelektrischen Meßwandlern, die mit piezoresistiven Widerständen (R₁-R₄) arbeiten, mit einer die piezoresistiven Widerstände (R₁-R₄) enthaltenden Brückenschaltung (2), die mit ihrer ersten Diagonale an eine spannungsgesteuerte Konstantstromquelle (1) und mit ihrer zweiten Diagonale an eine das Meßsignal des Meßwandlers erzeugende Schaltung (7,8) angeschlossen ist, mit einer an die Anschlüsse der ersten Diagonale geschalteten Korrekturspannungsmeßanordnung (4,5,6), die einen mit seinen Eingängen über die Brückendiagonale geschalteten ersten Verstärker (4), einen mit seinen Eingängen über den Referenzwiderstand (3) geschalteten, mit seinem einen Eingang an einen Eingang des ersten Verstärkers (4) geschalteten zweiten Verstärker (5) und einen an die Ausgänge dieser beiden Verstärker (4,5) angeschlossenen dritten Verstärker (6) enthält, wobei das Ausgangssignal dieser Korrekturspannungsmeßanordnung (4,5,6) dem Eingang der die Brückenschaltung (2) speisenden spannungsgesteuerten Konstantstromquelle (1) zugeführt ist, und wobei die Brückenschaltung (2) mit ihrer ersten Diagonale in Reihe zwischen die Konstantstromquelle (1) und einen Referenzwiderstand (3) geschaltet ist, der eine von Temperaturänderungen weitgehend unbeeinflußte Referenzspannung für die Korrekturspannungsmeßanordnung (4,5,6) erzeugt.

6. Schaltungsanordnung nach Anspruch 5, wobei der dritte Verstärker (6) den Quotienten (x/y) seiner Eingangsspannungen bildet.

7. Schaltunganordnung nach Anspruch 5, wobei der dritte Verstärker (6) ein die Differenz seiner Eingangsspannungen bildender Differenzverstärker ist.

8. Schaltungsanordnung nach Anspruch 5, wobei ein Potentiometer (P₁) in die Verbindung zwischen der Korrekturspannungsmeßanordnung (4,5,6) und der Konstantstromquelle (1) geschaltet ist.

9. Schaltungsanordnung nach einem der Ansprüche 5 bis 8, wobei das Ausgangssignal der Korrekturspannungsmeßanordnung (4,5,6) und das an der anderen Brückendiagonale gewonnene Meßsignal des Meßwandlers einem gemeinsamen Summationspunkt (8) zugeführt sind.

10. Schaltungsanordnung nach Anspruch 9, wobei ein zweites Potentiometer (P₂) zwischen den Ausgang der Korrekturspannungsmeßanordnung (4,5,6) und den Summationspunkt (8) geschaltet ist.

11. Schaltungsanordnung nach Anspruch 9 oder 10, wobei an den Summationspunkt (8) die Reihenschaltung aus einer Kompensationsspannungsquelle (9) und einem dritten Potentiometer (P₃) angeschlossen ist.

## Claims

1. A method of electrically compensating for the influence of temperature on the measurement signal of mechanical-electrical transducers, which operate with piezo-resistive resistors (R₁-R₄) in a bridge circuit (2), whose first diagonal is connected to a current source (1) and whose second diagonal is connected to the circuit (7, 8) producing the measurement signal, whereby in order to produce a correction signal dependent on the temperature the temperature-dependent changes in the equivalent resistance of the bridge circuit (2) is measured between the terminals with which the bridge circuit (2) is connected to its supply current source (1) and the measured value resulting therefrom is used as a correction signal to compensate for the influence of temperature, characterised in that the changes in the equivalent resistance are measured as changes in the quotient (x/y) of the bridge supply voltage and a reference voltage which constitute the correction signal.

2. Method as claimed in Claim 1, characterised in that the supply current or the supply voltage of the bridge circuit (2) is corrected proportionally to the change in the bridge equivalent resistance in order to compensate for temperature-dependent changes in the transmission factor of the transducer.

3. Method as claimed in one of the preceding claims, characterised in that a voltage is derived from the measured value produced by the resistance measurement at the first bridge diagonal, which voltage corresponds to the amount of the temperature-determined changes in the measurement signal from the transducer but has the opposite polarity and is used to compensate for these changes in the measurement signal.

4. Method as claimed in one of the preceding claims, characterised in that the non-linear temperature dependence of the measurement signal from the transducer with a fixed resistance of lower temperature dependence connected in parallel with one of the piezo-resistive bridge resistances is matched to the characteristic, non-linear temperature dependence of the piezo-resistive resistances.

5. Circuit for electrically compensating for the influence of temperature on the measurement signal of mechanical-electrical transducers, which operate with piezo-resistive resistances (R₁-R₄), with a bridge circuit (2) which includes the piezo-resistive resistances (R₁-R₄) and whose first diagonal is connected to a voltage-controlled constant current source (1) and whose second diagonal is connected to a circuit (7, 8) producing the measurement signal from the transducer, with a correction voltage measuring arrangement (4, 5, 6) which is connected to the connections of the first diagonal and which includes a first amplifier (4), whose inputs are connected across the bridge diagonal, a second amplifier (5), whose inputs are connected across the reference resistance (3) and whose one input is connected to one input of the first amplifier (4), and a third amplifier (6) connected to the outputs of these two amplifiers (4, 5), the output signal of this correction voltage measuring arrangement (4, 5, 6) being supplied to the input of the voltage-controlled constant current source (1) supplying the bridge circuit (2) and the bridge circuit (2) being connected with its first diagonal in series between the constant current source (1) and a reference resistance (3) which produces a reference voltage for the correction voltage measuring arrangement (4, 5, 6) substantially uninfluenced by changes in temperature.

6. Circuit as claimed in Claim 5, wherein the third amplifier (6) produces the quotient (x/y) of its input voltages.

7. Circuit as claimed in Claim 5, wherein the third amplifier (6) is a differential amplifier producing the difference between its input voltages.

8. Circuit as claimed in Claim 5, wherein a potentiometer (P₁) is connected into the connection between the correction voltage measuring arrangement (4, 5, 6) and the constant current source (1).

9. Circuit as claimed in one of Claims 5 to 8, wherein the output signal of the correction voltage measuring arrangement (4, 5, 6) and the measurement signal from the transducer produced at the other bridge diagonal are supplied to a common summation point (8).

10. Circuit as claimed in Claim 9, wherein a second potentiometer (P₂) is connected between the output of the correction voltage measuring arrangement (4, 5, 6) and the summation point (8).

11. Circuit as claimed in Claim 9 or 10, wherein connected to the summation point (8) is the series circuit comprising a compensation voltage source (9) and a third potentiometer (P₃).

## Revendications

1. Procédé de compensation électrique de l'influence de la température sur le signal de mesure provenant de transducteurs mécano-électriques qui fonctionnent avec des résistances piézorésistives (R₁-R₄) dans un circuit en pont (2) qui est raccordé, par sa première diagonale, à une source de courant (1) et, par sa seconde diagonale, à un circuit produisant le signal de mesure, dans lequel on mesure, pour la production d'un signal de correction dépendant de la température, les variations, en fonction de la température, de la résistance équivalente du circuit en pont (2) entre les bornes par lesquelles le circuit en pont (2) est connecté à sa source de courant d'alimentation (1), et on utilise la valeur de mesure ainsi obtenue en tant que signal de correction pour la compensation de l'influence de la température, caractérisé en ce qu'on mesure les variations de la résistance équivalente en tant que variations du quotient (x/y) entre la tension d'alimentation du pont et une tension de référence, lesquelles forment le signal de correction.

2. Procédé suivant la revendication 1 caractérisé en ce qu'on corrige, proportionnellement à la variation de la résistance équivalente du pont, le courant d'alimentation ou la tension d'alimentation du circuit en pont (2) afin de compenser les variations, en fonction de la température, du facteur de transfert du transducteur.

3. Procédé suivant l'une quelconque des revendications précédentes caractérisé en ce qu'on produit, à partir de la valeur mesurée obtenue par la mesure de résistance sur la première diagonale du pont, une tension qui correspond à la grandeur des variations, en fonction de la température, du signal de mesure du transducteur mais de polarité opposée et qui est utilisée pour la compensation de ces variations du signal de mesure.

4. Procédé suivant l'une quelconque des revendications précédentes caractérisé en ce que la variabilité non linéaire du signal de mesure du transducteur en fonction de la température est adaptée, au moyen d'une résistance fixe à faible variabilité en fonction de la température, branchée en parallèle sur l'une des résistances piézorésistives du pont, à la variabilité non linéaire caractéristique, en fonction de la température, des résistances piézorésistives.

5. Montage pour la compensation électrique de l'influence de la température sur le signal de mesure provenant de transducteurs mécano-électriques qui fonctionnent avec des résistances piézorésistives (R₁-R₄), comportant un circuit en pont (2) comprenant les résistances piézorésistives (R₁-R₄) qui est raccordé, par sa première diagonale, à une source de courant constant (1) commandée en tension et, par sa seconde diagonale à un circuit (7,8) produisant le signal de mesure du transducteur, un circuit de mesure d'une tension de correction (4,5,6) branché aux bornes de la première diagonale, lequel comporte un premier amplificateur (4) dont les entrées sont reliées à la première diagonale du pont, un deuxième amplificateur (5) dont les entrées sont branchées aux bornes de la résistance de référence (3), avec une entrée reliée à une entrée du premier amplificateur (4), et un troisième amplificateur (6) relié aux sorties des deux premiers amplificateurs (4,5), le signal de sortie de ce circuit (4,5,6) de mesure de la tension de correction étant appliqué à l'entrée de la source de courant constant (1), commandée en tension, alimentant le circuit en pont (2), le circuit en pont (2) étant connecté en série, par sa première diagonale, entre la source de courant constant (1) et une résistance de référence (3) qui produit une tension de référence qui n'est largement pas influencée par des variations de la température, pour le circuit (4,5,6) de mesure de la tension de correction.

6. Montage suivant la revendication 5 caractérisé en ce que le troisième amplificateur (6) forme le quotient (x/y) de ses tensions d'entrée.

7. Montage suivant la revendication 5 caractérisé en ce que le troisième amplificateur (6) est un amplificateur différentiel formant la différence entre ses tensions d'entrée.

8. Montage suivant la revendication 5 caractérisé en ce qu'un potentiomètre (P₁) est branché dans la liaison entre le circuit (4,5,6) de mesure de la tension de correction et la source de courant constant (1).

9. Montage suivant l'une quelconque des revendications 5 à 8 caractérisé en ce que le signal de sortie du circuit (4,5,6) de mesure de la tension de correction et le signal de mesure du transducteur recueilli sur l'autre diagonale du pont sont appliqués à un point de sommation commun (8).

10. Montage suivant la revendication 9 caractérisé en ce qu'un second potentiomètre (P₂) est branché entre la sortie du circuit (4,5,6) de mesure de la tension de correction et le point de sommation (8).

11. Montage suivant l'une quelconque des revendications 9 ou 10 caractérisé en ce que le circuit série d'une source de tension de compensation (9) et d'un troisième potentiomètre (P₃) est connecté au point de sommation (8).
